# EUROPÄISCHE PATENTANMELDUNG

(11) **EP 4 553 004 A1**
(43) Veröffentlichungstag der Anmeldung: **14.05.2025**
(21) Anmeldenummer: 23208224.8
(22) Anmeldetag: 07.11.2023
(51) Int. Cl.: B65G 1/04, B66F 9/07

(54) **REGALBEDIENGERÄT**

(71) Anmelder: MIAS Maschinenbau, Industrieanlagen & Service GmbH, 85386 Eching (DE)
(72) Erfinder: Schubert, Ingomar, 81829 München (DE); Hohnhorst, Antonio, 82140 Olching (DE); Hoole, Martin, 80796 München (DE); Motilva, Manuel, 82110 Germering (DE); Kiener, Michael, 92536 Pfreimd (DE)
(74) Vertreter: Weickmann & Weickmann PartmbB

(57) **Zusammenfassung**

Die Erfindung betrifft ein Regalbediengerät (100) für ein Hochregallager. Das Regalbediengerät (100) umfasst eine Fahr- und Hub-Vorrichtung (102), welche das Regalbediengerät (100) zumindest in einer Längsrichtung (L) und in Höhenrichtung (H) verfährt, und eine Lastaufnahmevorrichtung (112) mit einer Teleskopgabelanordnung (114), welche relativ zur Fahr- und Hub-Vorrichtung (102) zumindest in einer Querrichtung (Q) verlagerbar ist. Erfindungsgemäß ist ferner eine Bilderfassungsvorrichtung (116) vorgesehen, sowie eine Auswertevorrichtung (118), welche wenigstens ein von der Bilderfassungsvorrichtung (116) erfasstes Bild nach wenigstens einem vorbestimmten Kriterium auswertet und ein entsprechendes Auswertungsergebnis ausgibt.

## Beschreibung

Die Erfindung betrifft ein Regalbediengerät für ein dem Regalbediengerät zugeordnetes, aber nicht zum Regalbediengerät gehörendes Hochregallager, das Regalbediengerät umfassend eine Fahr- und Hub-Vorrichtung, welche dazu ausgebildet ist, das Regalbediengerät zumindest in einer horizontal verlaufenden Längsrichtung und in Höhenrichtung zu verfahren, und eine Lastaufnahmevorrichtung mit einer Teleskopgabelanordnung, welche relativ zur Fahr- und Hub-Vorrichtung zumindest in einer sowohl zur Längsrichtung als auch zur Höhenrichtung im Wesentlichen orthogonal verlaufenden Querrichtung verlagerbar ist,

Derartige Regalbediengeräte sind allgemein bekannt. Sie werden dazu genutzt, auf Paletten angeordnete Güter in Fächer von Hochregallagern einzulagern bzw. wieder aus diesen auszulagern. Dabei findet das Ein- und Auslagern vorzugsweise automatisiert statt. Die Automatisierung setzt allerdings einen einwandfreien Zustand der Paletten und der auf ihnen angeordneten Güter, sowie insbesondere beim Auslagern eine präzise Anordnung der Paletten in den Fächern voraus. Sind diese Voraussetzungen nicht gegeben, so kann es zu einer Verschiebung der betroffenen Palette in dem Hochregallagerfach kommen. Schlimmstenfalls kann die Palette sogar von dem oder den Querriegeln des Hochregallagers heruntergeschoben werden, was zu einem Verkanten oder gar Abstürzen der Palette einschließlich der auf ihr angeordneten Güter führen kann.

Demgegenüber ist es Aufgabe der vorliegenden Erfindung, ein Regalbediengerät der eingangs genannten Art derart weiterzubilden, dass Fehler im Vorfeld des eigentlichen Auslagervorgangs erkannt werden können.

Diese Aufgabe wird erfindungsgemäß durch ein Regalbediengerät der eingangs genannten Art gelöst, welches ferner eine Bilderfassungsvorrichtung umfasst, welche dazu ausgebildet ist, wenigstens ein Bild eines in Querrichtung neben der Lastaufnahmevorrichtung angeordneten Raumbereichs, d.h. des Hochregallagerfachs, zu erfassen, sowie eine Auswertevorrichtung umfasst, welche dazu ausgebildet ist, das wenigstens eine von der Bilderfassungsvorrichtung erfasste Bild nach wenigstens einem vorbestimmten Kriterium auszuwerten und ein entsprechendes Auswertungsergebnis auszugeben.

Durch die erfindungsgemäße Weiterbildung des Regalbediengeräts kann zumindest dann, wenn für einen vorbestimmten Typ von fehlerbehafteten Zuständen eingelagerter Paletten ein vorbestimmtes Kriterium aufgestellt werden kann, anhand dessen dieser Fehlertyp erkannt werden kann, und dieser Fehlertyp von der Auswertevorrichtung anhand des von der Bilderfassungsvorrichtung erfassten Bilds erkannt wird, ein dieses Auswertungsergebnis wiederspiegelndes Signal ausgegeben werden. Infolge dieses Fehlersignals kann der Betrieb des Regalbediengeräts unterbrochen werden, um einer oder mehreren Bedienungspersonen die Möglichkeit zu geben, Gegenmaßnahmen gegen den erkannten Fehler zu ergreifen. Auf diese Weise können längere Abschaltzeiten vermieden werden, die durch die vorstehend beschriebenen Folgen eines Verkantens oder gar Abstürzens der Palette einschließlich der auf ihr angeordneten Güter verursacht würden. Insgesamt können somit die fehlerbedingten Abschaltzeiten verkürzt und somit die Effizienz des Regalbediengeräts erhöht werden.

In Weiterbildung der Erfindung kann vorgesehen sein, dass das Regalbediengerät ferner eine Steuervorrichtung umfasst, welche dazu ausgebildet ist, die Fahr- und Hub-Vorrichtung und/oder die Teleskopgabelanordnung der Lastaufnahmevorrichtung und/oder wenigstens eine zusätzlich vorgesehene Hilfseinrichtung in Abhängigkeit von dem Auswertungsergebnis anzusteuern. Hierdurch können die Fahr- und Hub-Vorrichtung und/oder die Teleskopgabelanordnung der Lastaufnahmevorrichtung und/oder die wenigstens eine zusätzlich vorgesehene Hilfseinrichtung in Abhängigkeit von dem Auswertungsergebnis im Sinne einer Behebung bzw. Kompensation des Fehlers angesteuert werden. Auf diese Weise kann eine ganze Reihe von Fehlern bzw. Fehlertypen automatisiert behoben bzw. kompensiert werden, ohne dass ein Eingreifen einer Bedienungsperson erforderlich wäre. Dies erhöht den Automatisierungsgrad des Regalbediengeräts weiter.

Ferner kann in der Steuervorrichtung oder einer mit dieser verbundenen Speichereinheit eine vorab festgelegte Bewegungsabfolge zur Behebung etwaiger Fehler gespeichert sein. In diesem Zusammenhang kann vorgesehen sein, dass das Auswertungsergebnis nicht nur ein rein qualitatives Ergebnis ist, d.h. lediglich angibt, ob ein Fehler des fraglichen Fehlertyps vorliegt, sondern auch eine quantitative Aussage beinhaltet, d.h. angibt, wie stark der Fehler des fraglichen Fehlertyps ausgeprägt ist. Ferner kann die Steuervorrichtung dazu ausgebildet sein, die zur Behebung bzw. Kompensation des Fehlers gespeicherte Bewegungsabfolge in Abhängigkeit von einer in dem Auswertungsergebnis enthaltenen quantitativen Angabe über den Fehler anzupassen.

Auch bei Behebung bzw. Kompensation des Fehlers ist es erfindungsgemäß möglich, in Anhängigkeit von dem erkannten und behobenen Fehlertyp einen Fehlerhinweis auszugeben. Er braucht aber nicht notwendigerweise immer ausgegeben zu werden. So kann ein derartiger Fehlerhinweis beispielsweise im Falle einer Beschädigung der Palette ausgegeben werden. Im Falle lediglich einer Fehlorientierung der Palette braucht ein derartiger Fehlerhinweis hingegen nicht ausgegeben zu werden. Die Ausgabe eines Fehlerhinweises hat aber im Unterschied zum Stand der Technik nicht die Unterbrechung des Auslagervorgangs zur Folge. Vielmehr kann die beschädigte Palette zu einem speziell dafür vorgesehenen Ort gebracht werden, der leichter zugänglich ist als das Hochregallagerfach, das sich durchaus in luftiger Höhe befinden kann, und dort repariert oder ausgetauscht werden.

In Weiterbildung der Erfindung wird vorgeschlagen, dass die Bilderfassungsvorrichtung wenigstens eine Kamera und/oder wenigstens einen Laserprofilsensor und/oder wenigstens einen Ultraschallsensor umfasst.

Um den in Querrichtung neben der Lastaufnahmevorrichtung angeordneten Raumbereich aus einem möglichst günstigen Blickwinkel erfassen zu können, kann ferner vorgesehen sein, dass die Bilderfassungsvorrichtung relativ zu der Lastaufnahmevorrichtung beweglich angeordnet ist. Auf diese Weise kann sie zwischen einer ausgefahrenen Stellung, in der sie beispielsweise im Wesentlichen auf gleicher Höhe wie die Lastaufnahmevorrichtung angeordnet ist und somit einen günstigen Blickwinkel auf den in Querrichtung neben der Lastaufnahmevorrichtung angeordneten Raumbereich hat, also beispielsweise das Hochregallagerfach, und einer zurückgezogenen Stellung, in der sie beispielsweise unterhalb der Lastaufnahmevorrichtung angeordnet ist, verstellt werden. In der zurückgezogenen Stellung stört die Bilderfassungsvorrichtung zum einen den eigentlichen Auslagervorgang nicht, und zum anderen ist in dieser Stellung das Risiko einer Beschädigung der Bilderfassungsvorrichtung während des eigentlichen Auslagervorgangs reduziert.

Vorteilhafterweise kann das von der Bilderfassungsvorrichtung erfasste Bild ein zwei- oder dreidimensionales Bild sein bzw. ein Bild, das zu wenigstens einem seiner Bildpunkte, vorzugsweise zu einer Mehrzahl seiner Bildpunkte, noch bevorzugter zu allen seinen Bildpunkten, zusätzlich eine Information über den Abstand des Bildpunkts von der Bilderfassungsvorrichtung enthält. Dies kann beispielsweise dadurch erreicht werden, dass der Bilderfassungsvorrichtung wenigstens ein Laserentfernungsmesser zugeordnet ist.

Alternativ kann vorgesehen sein, dass die Bilderfassungsvorrichtung den in Querrichtung neben der Lastaufnahmevorrichtung angeordneten Raumbereich aus einer Mehrzahl von Blickrichtungen erfasst. Dies erlaubt es, die Abstandsinformation aus einem Vergleich der Mehrzahl von Bildern herauszurechnen, selbst wenn diese Bilder nur zweidimensionale Bilder sind.

Die Mehrzahl von Blickrichtungen kann beispielsweise dadurch erreicht werden, dass die vorstehende Beweglichkeit der Bilderfassungsvorrichtungen neben der ausgefahrenen Stellung und der zurückgezogenen Stellung noch wenigstens eine Zwischenstellung bereitstellt. Alternativ kann die Mehrzahl von Blickrichtungen auch durch eine Bewegung der Bilderfassungsvorrichtung mittels der Antriebe der Fahr- und Hub-Vorrichtung des Regalbediengeräts erzielt werden. Schließlich ist es gemäß einer weiteren Alternative aber auch denkbar, dass die Mehrzahl von Blickrichtungen durch das Vorsehen einer Mehrzahl von Kameras und/oder Laserprofilsensoren und/oder Ultraschallsensoren realisiert wird.

Die so gewonnene Abstandsinformation kann beispielsweise von der Auswertevorrichtung dazu verwendet werden, nicht nur relative Abstände, sondern auch absolute Abstände charakteristischer Punkte und/oder Linien der Palette zu ermitteln. Hierbei ist es hilfreich, dass die in Hochregallagern üblicherweise verwendeten Paletten einen bekannten, beispielsweise genormten, Aufbau mit bekannten, beispielsweise genormten, Abmessungen aufweisen.

In Weiterbildung der Erfindung wird vorgeschlagen, dass die Auswerteeinrichtung zur Auswertung des wenigstens einen von der Bilderfassungsvorrichtung erfassten Bildes eine herkömmliche Bilderkennungseinheit und/oder eine auf Grundlage einer Künstlichen Intelligenz (KI) arbeitende Bilderkennungseinheit umfasst. Die herkömmliche Bilderkennungseinheit kann dabei beispielsweise auf der Grundlage der Erkennung von charakteristischen Punkten und/oder Linien und/oder Flächen arbeiten. Zusätzlich oder alternativ kann die auf Grundlage Künstlicher Intelligenz (KI) arbeitende Bilderkennungseinheit vorab auf Basis einer Mehrzahl von vorab gemachten Bildern von in Querrichtung neben der Lastaufnahmevorrichtung angeordneten Raumbereichen mit darin angeordneten, fehlerhaften Paletten trainiert worden sein.

Ein erster Fehlertyp, der erfindungsgemäß erkannt und behoben werden kann, betrifft Paletten, die sich unter dem Gewicht der auf ihnen angeordneten Güter zwischen den Querriegeln des Hochregallagerfachs durchbiegen. Diese Durchbiegung reduziert die Einfahröffnung für die Teleskopgabelanordnung. Ist die Durchbiegung zu groß, kollidiert die Teleskopgabelanordnung beim Einfahren in die Palette mit dem zweiten, üblicherweise mittleren, Querbrett der Palette. Dadurch drückt die Teleskopgabelanordnung die Palette vom Querriegel, oder gegen die Durchschubsicherung des Hochregallagerfachs.

Um diesen ersten Fehlertyp erkennen zu können, kann die Bildauswerteeinheit als vorbestimmtes Kriterium beispielsweise die Lage und den Verlauf der Oberkante des vorderen Querriegels des Hochregallagerfachs mit der Lage und dem Verlauf der unteren Vorderkante des zweiten, üblicherweise mittleren, Querbretts der Palette vergleichen. Mit dieser unteren Vorderkante besteht bei einer Durchbiegung der Palette die größte Wahrscheinlichkeit einer Kollision mit der Teleskopgabelanordnung. Nachdem die Lage und der Verlauf dieser Kanten ermittelt wurden, ermittelt die Bildauswerteeinheit den Abstand zwischen den beiden Kanten, da er ein Maß für die Höhe der Einfahröffnung für die Teleskopgabelanordnung ist. Unterschreitet dieser Abstand einen vorbestimmten Wert, wird festgestellt, dass ein Fehler des ersten Fehlertyps vorliegt. Der Wert des ermittelten Abstands kann als Maß für die Stärke des Fehlers verwendet werden.

Ein zweiter Fehlertyp, der erfindungsgemäß erkannt und behoben werden kann, betrifft Paletten, bei denen sich an einem der unteren Längsbretter Nägel gelöst haben, so dass das betroffene Längsbrett nach unten absteht. Beim Einziehen der Teleskopgabelanordnung besteht die Gefahr, dass das Brett unten an der Basis der Lastaufnahmevorrichtung am Hubrahmen des Regalbediengeräts hängen bleibt, so dass die Palette wieder von der Teleskopgabelanordnung "abgezogen" wird.

Um diesen zweiten Fehlertyp erkennen zu können, kann die Bildauswerteeinheit als vorbestimmtes Kriterium beispielsweise die Lage und den Verlauf der Oberkante der unteren Längsbretter mit der Lage und dem Verlauf der Unterkante des zugeordneten Palettenfußes vergleichen. Weisen diese beiden Kanten einen Abstand voneinander auf, der einen vorbestimmten Wert überschreitet, wird festgestellt, dass ein Fehler des zweiten Fehlertyps vorliegt. Der Wert des ermittelten Abstands kann als Maß für die Stärke des Fehlers verwendet werden.

Ergänzend ist darauf hinzuweisen, dass dieser zweite Fehlertyp möglicherweise erst nach Anheben der Palette durch die Teleskopgabelanordnung erfasst werden kann. Wurde er erkannt, kann es erforderlich sein, die Palette erst noch einmal auf den Querriegeln des Hochregallagerfachs abzustellen, bevor Gegenmaßnahmen eingeleitet werden können.

Ein dritter Fehlertyp, der erfindungsgemäß erkannt und behoben werden kann, betrifft Paletten, welche um die vertikale Achse verdreht in dem Hochregallagerfach abgestellt worden sind. Auch hierdurch reduziert sind die zur Verfügung stehende Einfahröffnung für die Teleskopgabelanordnung, so dass die Gefahr einer Kollision der Teleskopgabelanordnung mit der Palette besteht.

Um diesen dritten Fehlertyp erkennen zu können, kann die Bildauswerteeinheit als vorbestimmtes Kriterium beispielsweise die Lage und den Verlauf von vertikalen Kanten der Palettenfüße vergleichen. So kann beispielsweise der Abstand zweier benachbarter Kanten, seien es benachbarte Kanten benachbarter Palettenfüße oder die beiden Kanten ein und desselben Palettenfußes, als Maß für die Verdrehung angesehen werden. Überschreitet dieser Abstand einen vorbestimmten Wert, wird festgestellt, dass ein Fehler des dritten Fehlertyps vorliegt. Der Wert des ermittelten Abstands kann als Maß für die Stärke des Fehlers verwendet werden.

Die Behebung der vorstehend diskutierten Fehlertypen wird zur Erleichterung des Verständnisses erst nachstehend mit Bezug auf die beigefügten Zeichnungen eingehend erläutert werden. An dieser Stelle sei lediglich darauf hingewiesen, dass neben den üblicherweise an Regalbediengeräten und Teleskopgabelanordnungen vorgesehenen Verstellmöglichkeiten auch noch Hilfseinrichtungen zum Einsatz kommen können.

In Weiterbildung der Erfindung wird vorgeschlagen, dass die wenigstens eine Hilfseinrichtung wenigstens ein an dem Regalbediengerät angeordnetes, zwischen wenigstens einer aktiven Stellung und einer passiven Stellung verstellbares, vorzugsweise auch höhenverstellbares, Unterlegelement umfasst. Das wenigstens eine Unterlegelement kann dabei ein zwischen der passiven Stellung und der wenigstens einen aktiven Stellung verschwenkbares oder linear verlagerbares Unterlegelement sein. Ferner kann die Höhenverstellbarkeit eine aktive, d.h. mittels eines Kraftgeräts herbeigeführte, oder auch eine passive, d.h. von einer anderen Bewegung abgeleitete, Höhenverstellbarkeit sein.

Zur Behebung des ersten Fehlertyps kann das wenigstens eine Unterlegelement in einer ersten aktiven Stellung nach Anheben des vorderen Rands der Palette zwischen der Oberseite des vorderen Querriegels des Hochregallagerfachs und den Unterseiten der vorderen Enden der Längsbretter der Palette angeordnet werden, um das Einführen der Teleskopgabelanordnung zu erleichtern.

Zur Behebung des zweiten Fehlertyps kann das wenigstens eine Unterlegelement in einer zweiten aktiven Stellung an der Vorderseite des vorderen Querriegels des Hochregallagerfachs anliegend oder dieser Vorderseite unmittelbar benachbart unmittelbar unterhalb der vorderen Enden der Längsbretter der Palette angeordnet werden, um diese Längsbretter beim Einziehen der Teleskopgabelanordnung zu unterstützen und somit deren Herabhängen zu verhindern.

Nachzutragen ist noch, dass die Bildauswertung durch die Auswertevorrichtung auch die Möglichkeit einer Fachfeinpositionierung bietet, die zum präzisen Anfahren des Palettenstellplatzes, d.h. des Hochregallagerfachs, verwendet werden kann. Zur Fachfeinpositionierung wird herkömmlich meist ein Loch im vorderen Querriegel des jeweiligen Hochregallagerfachs durch eine Bilderkennung gesucht und zur Positionierung genutzt. Alternativ könnte sich die erfindungsgemäß vorgesehene Auswerteeinheit zur Höhenpositionierung an der Oberkante des vorderen Querriegels und zur Positionierung in Längsrichtung, d.h. in Gassenrichtung, an den vertikalen Seitenkanten der Regalsteher orientieren.

Nachzutragen ist noch, dass dann, wenn die Auswertevorrichtung erkennt, dass die von der Bilderfassungsvorrichtung erfassten Bilder nicht ausgewertet werden können, beispielsweise weil das Blickfeld durch ein herabhängendes Stück Kunststofffolie verdeckt wird, eine entsprechende Fehlermeldung ausgeben kann.

Ferner ist es denkbar vorzusehen, dass eine Bedienungsperson in einem Leitstand das Auswerteergebnis der Auswertevorrichtung anhand der von der Bilderfassungsvorrichtung erfassten Bilder bestätigen muss, bevor mit der automatisierten Fehlerbehebung fortgefahren wird.

Die Erfindung wird im Folgenden anhand von Ausführungsbeispielen mit Bezug auf die begleitenden Zeichnungen näher erläutert werden. Es stellt dar:
- Figur 1: eine grob schematische Seitenansicht zur Erläuterung des grundlegenden Aufbaus eines erfindungsgemäßen Regalbediengeräts;
- Figur 2: eine vergrößerte Ansicht eines Ausschnitts aus Figur 1 ;
- Figur 3: eine perspektivische Ansicht einer Palette;
- Figuren 4a bis 4j: Darstellungen zur Erläuterung eines ersten Fehlertyps, nämlich der Ursache des Fehlertyps (Figur 4a), eines Kriteriums zu dessen Feststellung (Figur 4b), einer ersten Strategie zu dessen Behebung (Figuren 4c bis 4f), einer zweiten Strategie zu dessen Behebung (Figuren 4g und 4h) und einer dritten Strategie zu dessen Behebung (Figuren 4i und 4j);
- Figuren 5a bis 5e: Darstellungen zur Erläuterung eines zweiten Fehlertyps, nämlich der Ursache des Fehlertyps (Figur 5a), eines Kriteriums zu dessen Feststellung (Figur 5b) und einer Strategie zu dessen Behebung (Figuren 5c bis 5e); und
- Figuren 6a bis 6c: Darstellungen zur Erläuterung eines dritten Fehlertyps, nämlich der Ursache des Fehlertyps (Figur 6a), eines Kriteriums zu dessen Feststellung (Figur 6b) und einer Strategie zu dessen Behebung (Figur 6c).

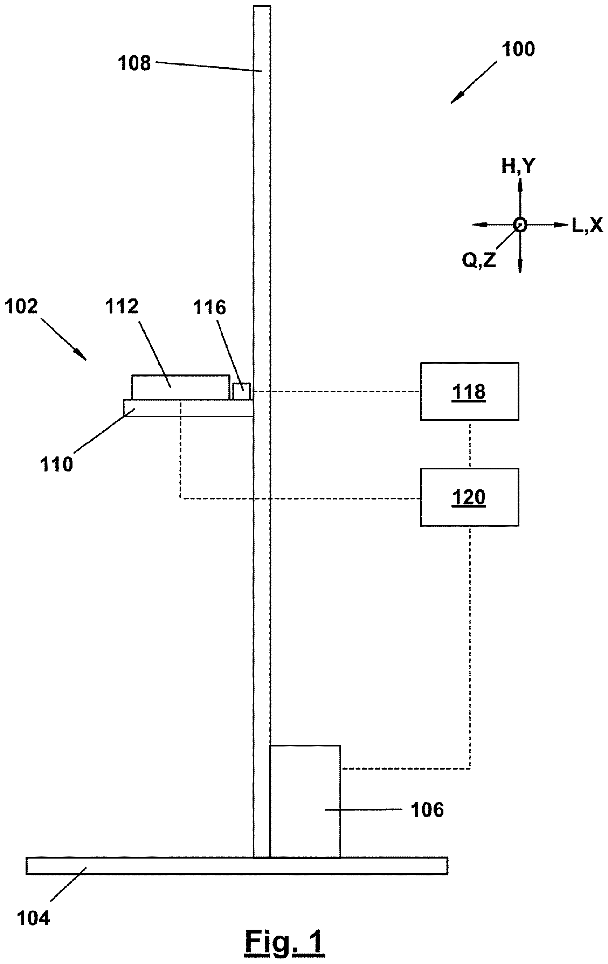

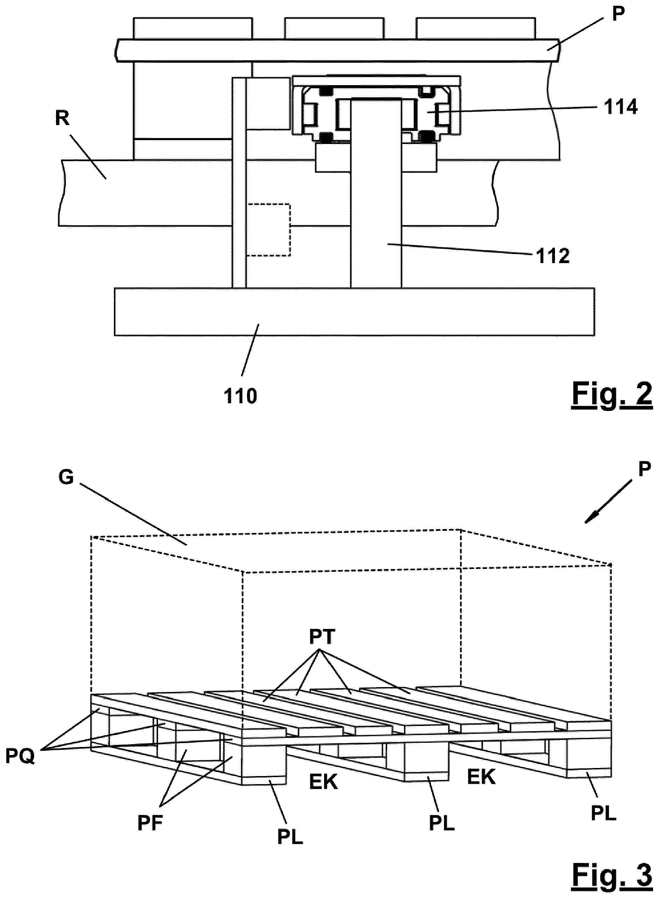

In Figur 1 ist ein erfindungsgemäßes Regalbediengerät ganz allgemein mit 100 bezeichnet. Das Regalbediengerät 100 dient zum Einlagern und Auslagern von auf Paletten P angeordneten Gütern G (siehe Figur 3) in Lagerfächern eines an sich bekannten und nicht zur Erfindung gehörenden Hochregallagers, dessen Querriegel R in einigen Figuren schematisch angedeutet sind (siehe beispielsweise Figur 2).

Wie in Figur 1 dargestellt ist, umfasst das Regalbediengerät 100 eine Fahr- und Hub-Vorrichtung 102 mit einer horizontalen Schiene 104, die sich in Längsrichtung L (auch X-Richtung genannt) einer zwischen zwei Regalen angeordneten Gasse erstreckt, einer Basiseinheit 106, die längs der Schiene 104 in Längsrichtung L verfahrbar ist, eine an der Basiseinheit 106 angebrachte vertikale Schiene 108, die sich in Höhenrichtung H (auch Y-Richtung genannt) erstreckt und zusammen mit der Basiseinheit 106 in Längsrichtung L verfahrbar ist, und einen Hubschlitten 110, der längs der vertikalen Schiene 108 in Höhenrichtung verfahrbar ist. Die Antriebe für die Verfahrbarkeit in Längs- und Höhenrichtung können in der Basiseinheit 106 angeordnet sein. Der Hubschlitten 110 trägt eine Lastaufnahmevorrichtung 112 mit einer Teleskopgabelanordnung 114, welche sich vom Hubschlitten 110 ausgehend in Querrichtung Q (auch Z-Richtung genannt) in die Regalfächer hineinerstrecken kann, um dort auf Paletten P angeordnete Güter G einzulagern oder aus diesen wieder auszulagern.

Insbesondere beim Auslagern der Paletten P kann eine Vielzahl von Problemen bzw. Fehlern auftreten, die sich in eine Reihe von Fehlertypen zusammenfassen lassen. Nachstehend werden drei dieser Fehlertypen, deren Erkennung und Strategien zu deren Behebung näher erläutert werden.

Um die Erkennung dieser Fehlertypen automatisiert ablaufen lassen zu können, umfasst das Regalbediengerät 100 ferner eine Bilderfassungsvorrichtung 116, beispielsweise eine Kamera, welche dazu ausgebildet ist, wenigstens ein Bild eines in Querrichtung Q neben der Lastaufnahmevorrichtung 112 angeordneten Lagerfachs zu erfassen, und eine Auswertevorrichtung 118, welche dazu ausgebildet ist, das wenigstens eine von der Bilderfassungsvorrichtung 116 erfasste Bild nach wenigstens einem vorbestimmten Kriterium auszuwerten und ein entsprechendes Auswertungsergebnis auszugeben.

Das Auswertungsergebnis kann beispielsweise in Form eines Fehlersignals ausgegeben werden, das eine Bedienungsperson auf den Plan ruft, um den Fehler zu beheben.

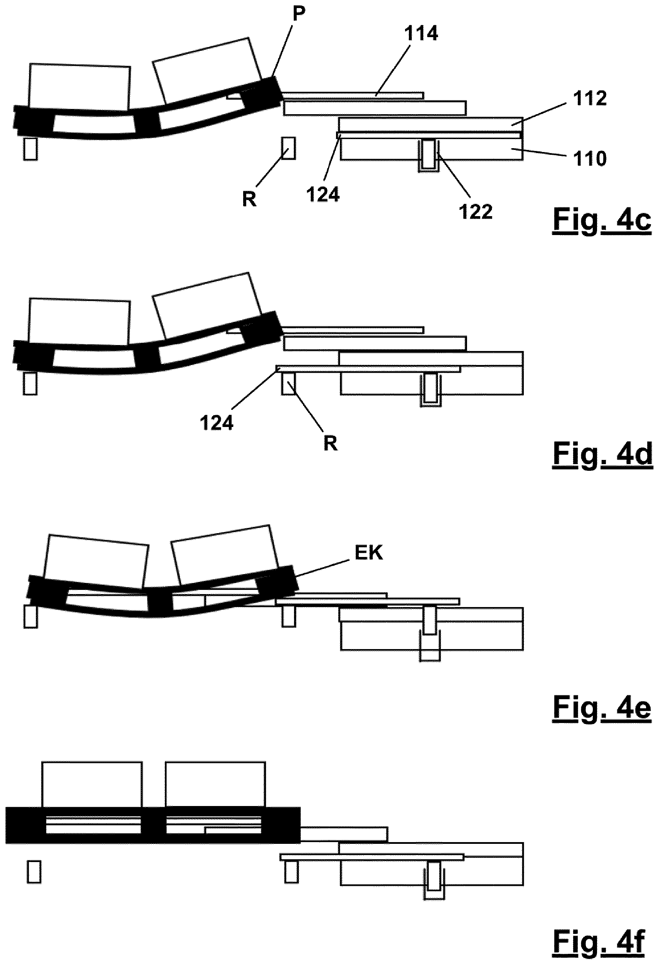

Die Behebung des Fehlers kann aber, wie für das Ausführungsbeispiel der Figur 1 gezeigt, auch automatisiert ablaufen. Hierzu kann das Regalbediengerät 100 ferner eine Steuervorrichtung 120 umfassen, welche dazu ausgebildet ist, die Fahr- und Hub-Vorrichtung 102 und/oder die Teleskopgabelanordnung 114 der Lastaufnahmevorrichtung 112 und/oder wenigstens eine zusätzlich vorgesehene Hilfseinrichtung 122 (siehe beispielsweise Figuren 4c bis 4f) in Abhängigkeit von dem Auswertungsergebnis anzusteuern.

Die Steuervorrichtung 120 ist in Figur 1 als gesonderte Einheit dargestellt. Es versteht sich jedoch, dass sie auch als Teil der Gesamtsteuerung des Regalbediengeräts 100 ausgebildet sein kann.

Bevor auf diese drei Fehlertypen im Einzelnen eingegangen wird, soll mit Bezug auf Figur 2 der übliche Aufbau von Paletten P erläutert werden, wie sie in Hochregallagern üblicherweise zum Einsatz kommen.

Diese Paletten P umfassen neun Palettenfüße PF, die in einem 3x3-Raster angeordnet sind. Ferner umfassen sie drei Längsbretter PL, von denen jedes mit der Unterseite von drei der Palettenfüße PF verbunden ist, und drei Querbretter PQ, von denen jedes mit der Oberseite von drei der Palettenfüße PF verbunden ist. Auf den Querbrettern PQ sind zusätzlich Tragbretter PT angebracht, auf denen die Güter G abgestellt werden können. In dem in ein Lagerfach eingelagerten Zustand einer Palette P erstrecken sich deren Querbretter PQ in Längsrichtung L des Regalbediengeräts 100 und deren Längsbretter PL und Tragbretter PT in Querrichtung Q des Regalbediengeräts 100.

Zwischen zwei einander benachbarten Längsbrettern PL und den ihnen zugeordneten Palettenfüßen PF und unterhalb der die Palettenfüße PF verbindenden Querbretter PQ erstreckt sich ein Einführkanal EK, in den ein Teleskopzinken der Teleskopgabelanordnung 114 eingeführt werden kann.

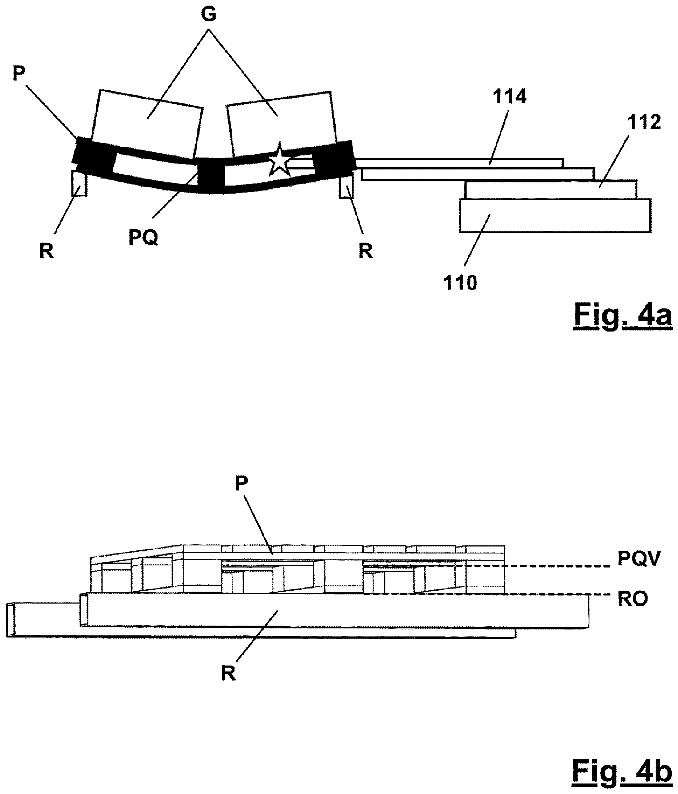

Ein erster Fehlertyp, der erfindungsgemäß erkannt und behoben werden kann, betrifft gemäß Figur 4a Paletten P, die sich unter dem Gewicht der auf ihnen angeordneten Güter G zwischen den Querriegeln Q des Lagerfachs durchbiegen. Diese Durchbiegung reduziert die Einfahröffnung für die Teleskopgabelanordnung 114. Ist die Durchbiegung zu groß, kollidiert die Teleskopgabelanordnung 114 beim Einfahren in die Palette P mit dem zweiten, üblicherweise mittleren, Querbrett PQ der Palette P, was in Figur 4a durch einen Stern angedeutet ist. Dadurch drückt die Teleskopgabelanordnung 114 die Palette P vom vorderen (in Fig. 4a rechten) Querriegel, oder gegen die (nicht dargestellte) Durchschubsicherung des Hochregallagerfachs.

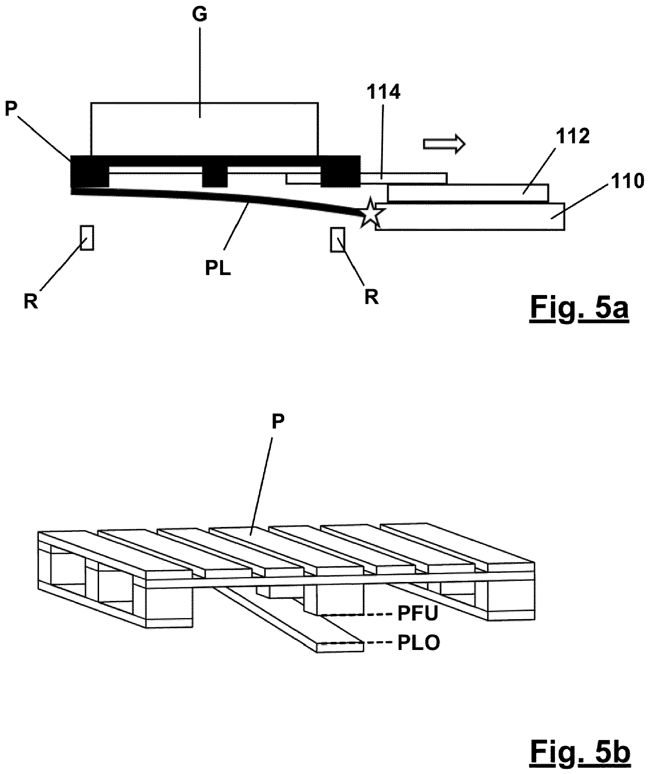

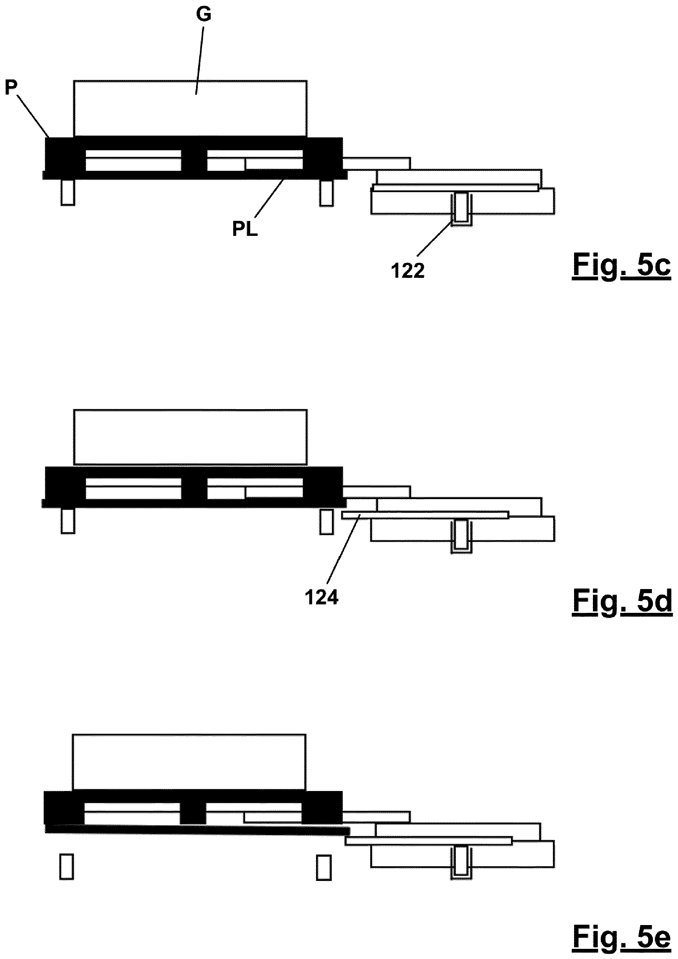

Ein zweiter Fehlertyp, der erfindungsgemäß erkannt und behoben werden kann, betrifft gemäß Figur 5a Paletten P, bei denen sich an einem der unteren Längsbretter PL Nägel gelöst haben, so dass das betroffene Längsbrett PL nach unten absteht. Beim Einziehen der Teleskopgabelanordnung 114 besteht daher die Gefahr, dass das Brett PL am Hubschlitten 110 des Regalbediengeräts 100 hängen bleibt, was in Figur 5a durch einen Stern angedeutet ist, so dass die Palette P wieder von der Teleskopgabelanordnung 114 "abgezogen" wird.

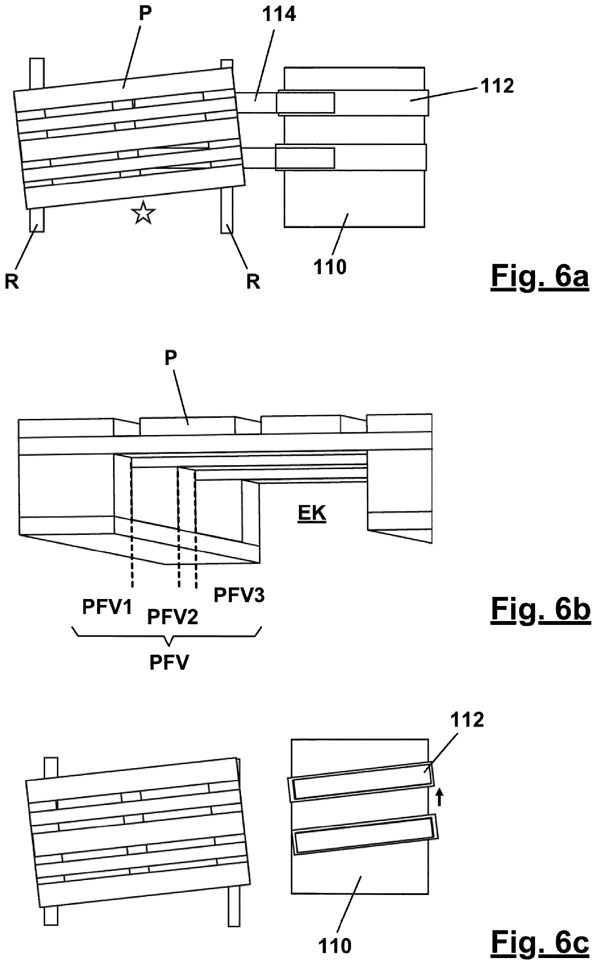

Ein dritter Fehlertyp, der erfindungsgemäß erkannt und behoben werden kann, betrifft gemäß Figur 6a Paletten P, welche um die vertikale Achse verdreht in dem Hochregallagerfach abgestellt worden sind. Auch hierdurch reduziert sind die zur Verfügung stehende Einfahröffnung für die Teleskopgabelanordnung 114, so dass die Gefahr einer Kollision der Teleskopgabelanordnung 114 mit der Palette P besteht, was in Figur 6a durch einen Stern angedeutet ist.

Um den ersten Fehlertyp erkennen zu können, kann die Bildauswerteeinheit 118 als vorbestimmtes Kriterium gemäß Figur 4b beispielsweise die Lage und den Verlauf der Oberkante RO des vorderen Querriegels R des Hochregallagerfachs mit der Lage und dem Verlauf der unteren Vorderkante PQV des zweiten, üblicherweise mittleren, Querbretts PQ der Palette P vergleichen. Mit dieser unteren Vorderkante PQV besteht bei einer Durchbiegung der Palette P die größte Wahrscheinlichkeit einer Kollision mit der Teleskopgabelanordnung 114. Nachdem die Lage und der Verlauf dieser Kanten RO und PQV ermittelt wurden, ermittelt die Bildauswerteeinheit 118 den Abstand zwischen den beiden Kanten, da er ein Maß für die Höhe des Einführkanals EK für die Teleskopgabelanordnung 114 ist. Unterschreitet dieser Abstand einen vorbestimmten Wert, wird festgestellt, dass ein Fehler des ersten Fehlertyps vorliegt. Der Wert des ermittelten Abstands kann als Maß für die Stärke des Fehlers verwendet werden.

Gemäß einer ersten Strategie zur Behebung des ersten Fehlertyps kann gemäß Figuren 4c bis 4f eine Hilfseinrichtung 122 eingesetzt werden, die an dem Hubschlitten 110 des Regalbediengeräts 100 angeordnet ist und ein Unterlegelement 124 umfasst, welches relativ zum Hubschlitten 110 in Querrichtung Q (vergleiche Figuren 4c und 4d) und in Höhenrichtung H (vergleiche Figuren 4d und 4e) verstellbar ist.

Gemäß der ersten Strategie wird die Palette P zunächst mittels der Teleskopgabelanordnung 114 an ihrem in Figur 4c rechten Ende angehoben. Anschließend wird das Unterlegelement 124 derart verlagert, dass sein in Figur 4d linkes Ende oberhalb des vorderen Querriegels R angeordnet ist. Nun wird die Palette P auf dem Unterlegelement 124 abgelegt (Figur 4e). Infolge des Unterlegelements 124 vergrößert sich die Höhe des Einführkanals EK derart, dass die Teleskopgabelanordnung 114 schließlich vollends in die Palette P eingeführt und die Palette P ordnungsgemäß angehoben werden kann (Figur 4f).

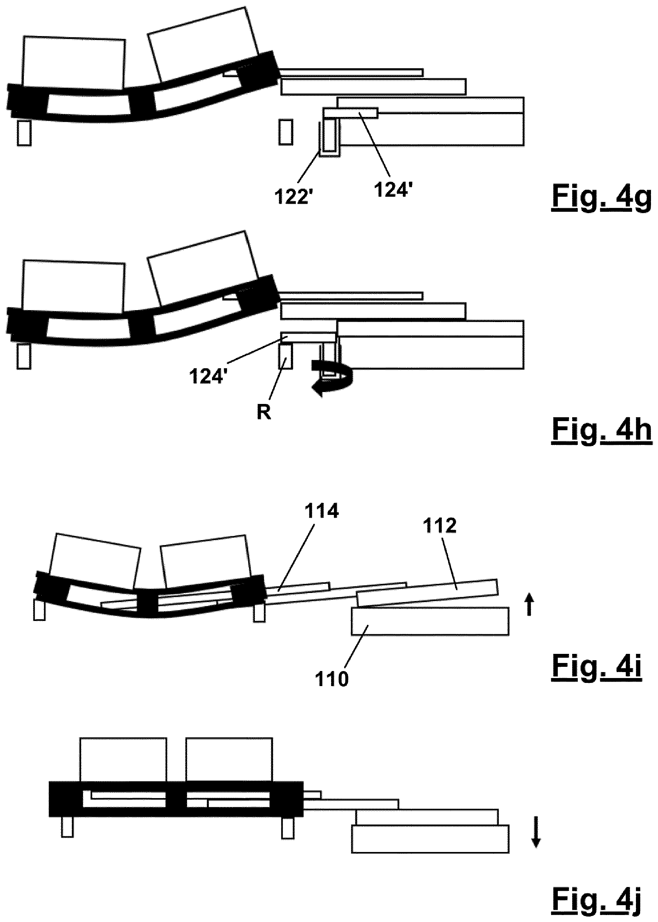

Gemäß einer zweiten Strategie (siehe Figuren 4g und 4h) kommt eine alternative Hilfseinrichtung 122` zum Einsatz, nämlich eine Hilfseinrichtung 122` mit einem um die Höhenrichtung H schwenkbaren Unterlegelement 124`. Ansonsten kann bezüglich der Vorgehensweise im Rahmen der zweiten Strategie auf die Erläuterung der ersten Strategie verwiesen werden.

Gemäß einer dritten Strategie (siehe Figuren 4i und 4j) kann eine Kippbarkeit der Lastaufnahmevorrichtung 112 um eine in Längsrichtung L verlaufende Achse relativ zum Hubschlitten 110 eingesetzt werden, wie sie aus dem Stand der Technik an sich schon bekannt ist. Wie man Figur 4i entnimmt, kann durch ein derartiges Verkippen der Lastaufnahmevorrichtung 112 (siehe Pfeil nach oben) der gleiche Effekt erzielt werden wie bei den ersten und zweiten Strategien durch das Unterlegen des Unterlegelements 124 bzw. 124`, nämlich eine faktische Vergrößerung der Höhe des Einführkanals EK, so dass die Teleskopgabelanordnung 114 vollends in die Palette P eingeführt (Figur 4i) und die Palette P nach dem Zurückkippen der Lastaufnahmevorrichtung 112 (siehe Pfeil nach unten in Figur 4j) ordnungsgemäß angehoben werden kann.

Um den zweiten Fehlertyp erkennen zu können, kann die Bildauswerteeinheit 118 gemäß Figur 5b als vorbestimmtes Kriterium beispielsweise die Lage und den Verlauf der Oberkante PLO der unteren Längsbretter PL mit der Lage und dem Verlauf der Unterkante PFU des zugeordneten Palettenfußes PF vergleichen. Wiesen diese beiden Kanten einen Abstand voneinander auf, der einen vorbestimmten Wert überschreitet, wird festgestellt, dass ein Fehler des zweiten Fehlertyps vorliegt. Der Wert des ermittelten Abstands kann als Maß für die Stärke des Fehlers verwendet werden.

Auch im Rahmen der Strategie zur Behebung des zweiten Fehlertyps kommt die Hilfseinrichtung 122 mit dem Unterlegelement 124 zum Einsatz. Allerdings wird das Unterlegelement 124 in diesem Fall zum Unterstützen des losen Längsbretts PL der Palette P verwendet (siehe Figur 5d), so dass dieses auch nach Anheben der Palette P (siehe Figur 5e) nicht nach unten hängen kann.

Um den dritten Fehlertyp erkennen zu können, kann die Bildauswerteeinheit 118 gemäß Figur 6b als vorbestimmtes Kriterium beispielsweise die Lage und den Verlauf von vertikalen Kanten PFV der Palettenfüße PF vergleichen. So kann beispielsweise der Abstand zweier benachbarter Kanten, seien es benachbarte Kanten PFV1 und PFV2 benachbarter Palettenfüße PF oder die beiden Kanten PFV2 und PFV3 ein und desselben Palettenfußes PF, als Maß für die Verdrehung angesehen werden. Überschreitet dieser Abstand einen vorbestimmten Wert, wird festgestellt, dass ein Fehler des dritten Fehlertyps vorliegt. Der Wert des ermittelten Abstands kann als Maß für die Stärke des Fehlers verwendet werden.

Zur Behebung des dritten Fehlertyps kann gemäß Figur 6c eine Verschwenkbarkeit der Lastaufnahmevorrichtung 112 um eine in Höhenrichtung H verlaufende Achse relativ zum Hubschlitten 110 eingesetzt werden, wie sie aus dem Stand der Technik an sich schon bekannt ist. Nach dem Verschwenken der Lastaufnahmevorrichtung 112 wird zudem das Regalbediengerät 100 in Längsrichtung L verfahren, um die Teleskopgabelanordnung 114 ordnungsgemäß in die Einführkanäle EK (siehe Figur 6b) der Palette P einführen zu können.

Nachzutragen ist noch, dass die Bilderfassungsvorrichtung 116 in Höhenrichtung H verstellbar ausgebildet sein kann. In Figur 2 erkennt man neben der dargestellten ausgefahrenen Stellung gestrichelt dargestellt auch noch eine zurückgezogene Stellung. Ferner kann in der Bilderfassungsvorrichtung 116 ein Laserentfernungsmesser integriert sein, um den einzelnen Bildpunkten auch noch eine Entfernungsinformation zuordnen zu können.

## Patentansprüche

1. Regalbediengerät (100) für ein dem Regalbediengerät zugeordnetes, aber nicht zum Regalbediengerät gehörendes Hochregallager, das Regalbediengerät (100) umfassend:
• eine Fahr- und Hub-Vorrichtung (102), welche dazu ausgebildet ist, das Regalbediengerät (100) zumindest in einer horizontal verlaufenden Längsrichtung (L) und in Höhenrichtung (H) zu verfahren, und
• eine Lastaufnahmevorrichtung (112) mit einer Teleskopgabelanordnung (114), welche relativ zur Fahr- und Hub-Vorrichtung (102) zumindest in einer sowohl zur Längsrichtung (L) als auch zur Höhenrichtung (H) im Wesentlichen orthogonal verlaufenden Querrichtung (Q) verlagerbar ist,
**dadurch gekennzeichnet, dass** das Regalbediengerät (100) ferner umfasst:
• eine Bilderfassungsvorrichtung (116), welche dazu ausgebildet ist, wenigstens ein Bild eines in Querrichtung (Q) neben der Lastaufnahmevorrichtung (112) angeordneten Raumbereichs zu erfassen, und
• eine Auswertevorrichtung (118), welche dazu ausgebildet ist, das wenigstens eine von der Bilderfassungsvorrichtung (116) erfasste Bild nach wenigstens einem vorbestimmten Kriterium auszuwerten und ein entsprechendes Auswertungsergebnis auszugeben.

2. Regalbediengerät nach Anspruch 1,
**dadurch gekennzeichnet, dass** es ferner eine Steuervorrichtung (120) umfasst, welche dazu ausgebildet ist, die Fahr- und Hub-Vorrichtung (102) und/oder die Teleskopgabelanordnung (114) der Lastaufnahmevorrichtung (112) und/oder wenigstens eine zusätzlich vorgesehene Hilfseinrichtung (122) in Abhängigkeit von dem Auswertungsergebnis anzusteuern.

3. Regalbediengerät nach Anspruch 1 oder 2,
**dadurch gekennzeichnet, dass** in der Steuervorrichtung (120) oder einer mit dieser verbundenen Speichereinheit eine vorab festgelegte Bewegungsabfolge zur Behebung etwaiger Fehler gespeichert ist.

4. Regalbediengerät nach einem der vorhergehenden Ansprüche,
**dadurch gekennzeichnet, dass** das Auswertungsergebnis neben einer qualitativen Aussage auch eine quantitative Aussage beinhaltet.

5. Regalbediengerät nach einem der Ansprüche 2 bis 4,
**dadurch gekennzeichnet, dass** in der Steuervorrichtung (120) oder einer mit dieser verbundenen Speichereinheit in Abhängigkeit von dem Auswertungsergebnis vorab festgelegte Bewegungsabfolgen gespeichert sind.

6. Regalbediengerät nach den Ansprüchen 4 und 5,
**dadurch gekennzeichnet, dass** die Steuervorrichtung (120) dazu ausgebildet ist, die Bewegungsabfolge in Abhängigkeit von der in dem Auswertungsergebnis enthaltenen quantitative Aussage anzupassen.

7. Regalbediengerät nach einem der vorhergehenden Ansprüche,
**dadurch gekennzeichnet, dass** die Bilderfassungsvorrichtung (116) wenigstens eine Kamera und/oder wenigstens einen Laserprofilsensor und/oder wenigstens einen Ultraschallsensor umfasst.

8. Regalbediengerät nach einem der vorhergehenden Ansprüche,
**dadurch gekennzeichnet, dass** die Bilderfassungsvorrichtung (116) relativ zu der Lastaufnahmevorrichtung (112) beweglich angeordnet ist.

9. Regalbediengerät nach einem der vorhergehenden Ansprüche,
**dadurch gekennzeichnet, dass** der Bilderfassungsvorrichtung (116) wenigstens ein Laserentfernungsmesser zugeordnet ist.

10. Regalbediengerät nach einem der vorhergehenden Ansprüche,
**dadurch gekennzeichnet, dass** die Bilderfassungsvorrichtung (116) dazu ausgebildet ist, den in Querrichtung (Q) neben der Lastaufnahmevorrichtung angeordneten Raumbereich aus einer Mehrzahl von Blickrichtungen zu erfassen.

11. Regalbediengerät nach einem der vorhergehenden Ansprüche,
**dadurch gekennzeichnet, dass** die Auswerteeinrichtung (118) zur Auswertung des wenigstens einen von der Bilderfassungsvorrichtung (116) erfassten Bildes eine herkömmliche Bilderkennungseinheit und/oder eine auf Grundlage einer Künstlichen Intelligenz (KI) arbeitende Bilderkennungseinheit umfasst.

12. Regalbediengerät nach einem der Ansprüche 2 bis 11,
**dadurch gekennzeichnet, dass** die wenigstens eine Hilfseinrichtung (122) wenigstens ein an dem Regalbediengerät (100) angeordnetes, zwischen wenigstens einer aktiven Stellung und einer passiven Stellung verstellbares, vorzugsweise auch höhenverstellbares, Hilfselement (124) umfasst.
